# EUROPEAN PATENT SPECIFICATION

(11) **EP 0 920 172 B1**
(45) Date of publication and mention of the grant of the patent: **07.01.2004**
(21) Application number: 97440122.6
(22) Date of filing: 28.11.1997
(51) Int. Cl.: H04M 3/40

(54) **Method of controlling an echo canceller in a data channel**
Verfahren zur Steuerung eines Echokompensators in einem Datenkanal
Méthode de commande d'un annuleur d'echo dans un canal de données

(43) Date of publication of application: 02.06.1999
(73) Proprietor: ALCATEL, 75008 Paris (FR)
(72) Inventor: Bosiers, William, 2540 Hove (BE)
(74) Representative: Knecht, Ulrich Karl, Dipl.-Ing.

(56) References cited:
- US-A- 5 381 474
- US-A- 5 689 556

## Description

This invention relates to a method of cancelling echoes in a data channel as set forth in the preamble of the main claim.

In end-to-end connections of communications systems, such as telephone connections, long delays are frequently encountered, which will cause echo signals if signals are reflected in the speech channel and transmitted back into the talker's transmission line. To cancel such disturbing echo signals, analog or digital devices are used to analyze speech signals in the speech channel, calculate an estimated echo signal with the aid of the analyzed signals, and subtract this estimated echo signal from the actual echo signal. There are connections, however, in which the installation of an echo canceller is not desirable. For example, if digital data is transmitted over a telephone network, constant bit rates are transmitted, with each bit having to be transmitted unchanged, i.e., in its original form, without being subjected to any echo cancellation. Modem transmissions over a telephone channel should not be subjected to echo cancellation, either. Furthermore, it is essential that during a test of an existing connection, test and measurement signals can be exchanged between the subscribers unchanged and analyzed unchanged.

WO 93/09610 discloses an echo canceller consisting of individual echo-cancelling units which are installed at the local exchange. These echo cancellers are controlled by a control unit which monitors the incoming channels at the exchange. With this arrangement it is possible to switch off the echo cancellers as soon as a modem signal, for example, is detected on an input line by a monitoring unit. The echo cancellers are controlled exclusively by the control unit at the local exchange, i.e., they cannot be influenced by the subscriber. Such an arrangement does not permit flexible use by the subscriber and may cause problems if connections are established to other local exchanges which also include echo cancellers. From an article by Jamal Sarma, "Echo-canceller design ensures hands-free, high-fidelity telephony", EDN, August 1, 1996, page 131, it is known that echo cancellers are also used in the terminals. They eliminate the need for the development of suitable software. The use of echo cancellers in terminals has the disadvantage, however, that each terminal must be equipped with such a circuit or the suitable software. The implementation of the echo cancellation function with circuits in the terminals can only be achieved by replacing the terminals.

The method with the characterizing features of the main claim has the advantage that the subscriber himself can signal that the function "echo cancellation" is to be set, this function being not necessarily implemented in the subscriber's terminal. Another advantage is that the subscriber can switch the echo canceller on and off by signalling his request to the exchange. This eliminates the need to replace terminals which do not have an echo-cancelling device. In addition, the echo cancellation function can be created and offered to the subscriber as a new service of the service provider.

The method set forth in the main claim can be improved by the measures recited in the subclaims.

In a preferred embodiment of the invention, the subscriber indicates his request for echo cancellation by operating a key of the keypad of his terminal. Advantageously, the request for echo cancellation is routed to the local exchange via a signalling line, the signalling being effected via a previously agreed key operation.

According to another advantageous aspect of the invention, the echo canceller at the local exchange can be used for more than one connection. This ensures a better utilization of the circuit and reduces the installation costs at the exchange.

According to a further advantageous aspect of the invention, if a connection is established between two subscribers whose respective local exchanges include echo cancellers, only one echo canceller can be activated. In the case of a connection in a network in which two or more echo cancellers are present, the activation of an echo canceller is advantageously effected from only one of the two subscribers.

To improve the speech transmission quality in each subscriber terminal, an echo canceller which cancels audible echoes at the caller's end is used at the local exchange. The caller generally does not have a terminal which is capable of cancelling echoes itself. In that case, the caller, by operating a control button or an arbitrary key of his terminal, for example, can call the function "echo cancellation" at the local exchange. With his request, he switches on an echo canceller at his local exchange which enables him to communicate with another subscriber without further echo disturbances. The echo canceller at the local exchange is available as an extra service to any connection which is transmitted through this exchange. The echo-cancelling circuit can thus be used by a plurality of connections associated with it, so that good utilization of the circuit is ensured and costs are minimized. To implement the echo cancellation function, only a separate service connection needs to be installed. The request for the service "echo cancellation" may also be signalled via a specific service code. The network operator can then charge the subscriber for the additional echo-cancellation service separately.

Collisions will occur if two or more subscribers in different networks of different operators communicate with one another. If echo cancellers are already available in different networks, problems may still arise in the area of the called subscriber. These problems may be caused by the failure of a local echo canceller, for example. In that case, the caller would solve the problems by sending the request for echo cancellation to his network oeprator. For that case, agreements must, of course, be made between the network operators, so that the caller will not have to pay for malfunctions in the network of the called subscriber.

## Claims

1. A method of cancelling echoes in a data channel which is suitable for transmitting data and/or speech and is switched via at least one exchange, **characterized in that** a subscriber who has, or is establishing, a connection to at least one further subscriber indicates his request that the echo should be cancelled, that said request is signalled to the local exchange, and that an echo canceller at the local exchange is activated.

2. A method as claimed in claim 1, **characterized in that** the subscriber indicates his request by operating at least one key of a keypad of his terminal.

3. A method as claimed in claim 1 or 2, **characterized in that** the terminal routes the request for echo cancellation to the local exchange via a signalling line.

4. A method as claimed in any one of the preceding claims, **characterized in that** the echo canceller at the local exchange is used for at least one connection.

5. A method as claimed in any one of the preceding claims, **characterized in that** after release of the connection, the echo canceller is deactivated.

6. A method as claimed in any one of the preceding claims, **characterized in that** in case of a connection between at least two subscribers whose respective local exchanges comprise echo cancellers, at least one echo canceller is activated.

7. A method as claimed in any one of the preceding claims, **characterized in that**, if there is more than one echo canceller in the network, an echo canceller is activated from the calling subscriber, said activation being charged to the called subscriber by the network operator of the latter.

## Patentansprüche

1. Verfahren zur Unterdrückung von Echos in einem Datenkanal, der für die Übertragung von Daten und/oder Sprache geeignet ist und über mindestens eine Vermittlungsstelle geschaltet wird, **dadurch gekennzeichnet, dass** ein Teilnehmer, der eine Verbindung zu mindestens einem weiteren Teilnehmer besitzt oder aufbaut, seinen Wunsch anzeigt, das Echo zu unterdrücken, und dass dieser Wunsch der Ortsvermittlungsstelle signalisiert wird und ein Echounterdrücker in der Ortsvermittlungsstelle aktiviert wird.

2. Verfahren nach Anspruch 1, **dadurch gekennzeichnet, dass** der Teilnehmer seinen Wunsch durch Betätigung mindestens einer Taste eines Tastenfeldes seines Endgeräts anzeigt.

3. Verfahren nach Anspruch 1 oder 2, **dadurch gekennzeichnet, dass** das Endgerät den Wunsch zur Echounterdrückung über eine Signalisierungsleitung an die Ortsvermittlungsstelle weiterleitet.

4. Verfahren nach einem der der vorhergehenden Ansprüche, **dadurch gekennzeichnet, dass** der Echounterdrücker in der Ortsvermittlungsstelle für mindestens eine Verbindung eingesetzt wird.

5. Verfahren nach einem der vorhergehenden Ansprüche, **dadurch gekennzeichnet, dass** der Echounterdrücker nach Beendigung der Verbindung deaktiviert wird.

6. Verfahren nach einem der vorhergehenden Ansprüche, **dadurch gekennzeichnet, dass** bei einer Verbindung zwischen mindestens zwei Teilnehmern, deren jeweilige Ortsvermittlungsstellen Echounterdrücker aufweisen, mindestens ein Echounterdrücker aktiviert wird.

7. Verfahren nach einem der vorhergehenden Ansprüche, **dadurch gekennzeichnet, dass** bei Vorhandensein von mehr als einem Echounterdrücker im Netz die Aktivierung eines Echounterdrückers vom anrufenden Teilnehmer aus erfolgt, wobei diese Aktivierung dem gerufenen Teilnehmer durch dessen Netzbetreiber in Rechnung gestellt wird.

## Revendications

1. Procédé d'élimination d'échos dans un canal de données qui est idoine pour la transmission des données et/ou de la parole et qui est mis en service par au moins un central téléphonique, **caractérisé en ce qu'**un abonné qui a une connexion, ou est en train d'en établir une, avec au moins un autre abonné indique sa demande que l'écho devrait être éliminé, que ladite demande est signalée au central téléphonique local, et qu'un éliminateur d'échos dans ce central téléphonique local est activé.

2. Procédé tel qu'il est revendiqué selon la revendication 1, **caractérisé en ce que** l'abonné indique sa demande en manipulant au moins une touche du clavier de son terminal.

3. Procédé tel qu'il est revendiqué selon la revendication 1 ou 2, **caractérisé en ce que** le terminal achemine la demande d'élimination d'échos au central téléphonique local par une ligne de signalisation.

4. Procédé tel qu'il est revendiqué selon l'une quelconque des revendications précédentes, **caractérisé en ce que** l'éliminateur d'échos au central téléphonique local est utilisé pour au moins une connexion.

5. Procédé tel qu'il est revendiqué selon l'une quelconque des revendications précédentes, **caractérisé en ce qu'**après la déconnexion, l'éliminateur d'échos est désactivé.

6. Procédé tel qu'il est revendiqué selon l'une quelconque des revendications précédentes, **caractérisé en ce qu'**en cas de connexion entre au moins deux abonnés dont les centraux téléphoniques locaux respectifs comportent des éliminateurs d'échos, au moins un éliminateur d'échos est activé.

7. Procédé tel qu'il est revendiqué selon l'une quelconque des revendications précédentes, **caractérisé en ce que**, s'il y a plus d'un éliminateur d'échos dans le réseau, un éliminateur d'échos est activé par l'abonné appeleur, la dite activation étant facturée à l'abonné appeleur par l'opérateur du réseau de ce dernier.
